# EUROPEAN PATENT SPECIFICATION

(11) **EP 1 857 180 B1**
(45) Date of publication and mention of the grant of the patent: **08.05.2013**
(21) Application number: 06714924.5
(22) Date of filing: 28.02.2006
(51) Int. Cl.: B01J 31/28, B01J 37/34, H01M 4/86, H01M 4/88

(54) **NOBLE METAL FINE PARTICLE SUPPORT AND METHOD OF MANUFACTURING THE SAME**
GEGENSTAND MIT AUFGETRAGENEN FEINEN EDELMETALLTEILCHEN UND ZUGEHÖRIGES HERSTELLUNGSVERFAHREN
ARTICLE COMPRENANT DE FINES PARTICULES DE MÉTAL NOBLE SUR CELUI-CI ET PROCÉDÉ DE FABRICATION IDOINE

(30) Priority: 28.02.2005 JP 2005052475; 17.10.2005 JP 2005301708
(43) Date of publication of application: 21.11.2007
(73) Proprietor: Nippon Sheet Glass Company, Limited, Tokyo 108-6321 (JP)
(72) Inventor: OGAWA, Ryohei Nippon Sheet Glass Company, Limited, Tokyo, 108-6321 (JP); MIKAMI, Shinji Nippon Sheet Glass Company, Limited, Tokyo, 108-6321 (JP); NISHIKAWA, Masami Nippon Sheet Glass Company, Limited, Tokyo, 108-6321 (JP)
(74) Representative: Hubert, Philippe
(86) International application number: PCT/JP2006/303800
(87) International publication number: WO 2006/093169

(56) References cited:
- WO-A-2004/048306
- JP-A- 62 180 745
- JP-A- 62 204 850
- JP-A- 2005 319 437
- ZHOU, JIANMIN ET AL: "MCM-41 supported aminopropylsiloxane palladium (0) complex: a highly active and stereoselective catalyst for Heck reaction" JOURNAL OF MOLECULAR CATALYSIS A: CHEMICAL ( 2002 ), 178(1-2), 289-292 CODEN: JMCCF2; ISSN: 1381-1169, 2002, XP002506609
- ZWENI, PUMZA P. ET AL: "Dendrimer- palladium complex catalyzed oxidation of terminal alkenes to methyl ketones" ADVANCED SYNTHESIS & CATALYSIS ( 2004 ), 346(7), 849-854 CODEN: ASCAF7; ISSN: 1615-4150, 2004, XP002506610
- ZHANG Y ET AL: "Silica immobilized ruthenium catalyst used for carbon dioxide hydrogenation to formic acid (I): the effect of functionalizing group and additive on the catalyst performance" CATALYSIS COMMUNICATIONS, ELSEVIER SCIENCE, AMSTERDAM, NL, vol. 5, no. 10, 1 October 2004 (2004-10-01), pages 643-646, XP004563816 ISSN: 1566-7367
- DONG ET AL: "ALTERATE ASSEMBLIES OF PLATINUM NANOPARTICLES AND METALLOPORPHYRINS AS TUNABLE ELECTROCATALYSTS FOR DIOXYGEN REDUCTION" LANGMUIR, vol. 21, 2004, pages 323-329, XP002506611

## Description

### TECHNICAL FIELD

The present invention relates to a noble metal fine particle support usable as a catalyst and a method of manufacturing the same.

### BACKGROUND ART

Noble metal fine particles are used widely as a catalyst. In this case, the noble metal fine particles need to be supported on a substrate. Examples of the materials used for the substrate include ceramics, metal oxide-based materials, carbon-based materials, metal materials, and organic polymer materials. For example, the support obtained by carrying noble metal fine particles on a carbon-based material is used as an electrode catalyst for fuel cells. Likewise, the support obtained by carrying noble metal fine particles on a metal oxide is used, for example, as a reforming catalyst for reforming an alcohol-based fuel to generate hydrogen. Furthermore, in the field of environmental engineering, the noble metal fine particle support also is used as a photocatalyst promoter for enhancing the activity of photocatalytic materials and a cracking catalyst for environmental toxic substances contained in industrial waste water or the like.

When noble metal fine particles are allowed to be supported on a substrate made of various materials, effective uses of the noble metal fine particle support can be made possible in various fields. Accordingly, there is a strong need for a noble metal fine particle support that is compatible with any type of substrate material. Likewise, there is a strong need for a method of manufacturing a noble metal fine particle support that can be employed with any type of substrate material.

The method for supporting noble metal fine particles can be classified broadly into two methods. One is a method (hereinafter also referred to as a direct reduction process) in which the noble metal is directly reduced at a substrate surface, and the other is a method (hereinafter also referred to as an adsorption process) in which a previously prepared dispersion of noble metal fine particles is contacted with a substrate surface to cause the substrate to adsorb the noble metal fine particles.

### (Direct Reduction Process)

JP 2000-157874A and JP 2003-320249A describe methods of mixing a substrate into a solution containing noble metal ions to impregnate the substrate with the noble metal ions, and thereafter reducing the noble metal by a reducing agent, a reducing gas, or ultraviolet irradiation.

### (Adsorption Process)

JP 2002-305001A describes a method of mixing a carbon material, such as carbon black, into a previously prepared dispersion of noble metal fine particles to cause natural adsorption, in order to support (adsorb) noble metal fine particles on a substrate.

The present applicant has disclosed in JP 2004-100040A a manufacturing method of a colloidal solution in which colloidal particles with a small particle size can be manufactured easily.

However, although the direct reduction process has an advantage that it can be applied to various types of substrates, it is difficult to control the particle size and degree of dispersion of noble metal fine particles, so the noble metal fine particles are supported unevenly. Moreover, it has a drawback that the specific surface area per unit mass of the noble metal in the support tends to be small.

On the other hand, the adsorption process has a drawback that the type of substrate that can support the noble metal particles is limited.

Namba and Ohkura reports in "Hakkin Koroido no Tukurikata to Tukaikata [How to Make and How to Use Platinum Colloid]" (Hyomen, 1983, Vol. 21, No. 8, pp. 450-456) a manufacturing process of platinum colloid that does not require a protective colloid.

In view of the foregoing, it will be very useful to provide a noble metal fine particle support in which noble metal fine particles are supported with good dispersibility irrespective of the type of substrate material, and a method of manufacturing a noble metal fine particle support that can be employed for any type of substrate material.

It is an object of the present invention to provide a noble metal fine particle support that has few limitations on the type of substrate material and in which the noble metal fine particles are supported on the substrate without unevenness over a wide area.

It is also an object of the invention to provide a method of manufacturing such a noble metal fine particle support.

US 4,797,380 shows a method for producing a highly dispersed catalyst, comprising: mixing a cross linking agent with a polymer having a reactive functional group in its molecular chain in a solvent in order to cross-link the polymer with the cross linking agent; apply the mixture of cross-linked polymer and solvent to a carrier; drying the carrier in order to remove the solvent therefrom, to form a polymer film of the polymer over the surface of the carrier; impregnating the polymer film with a metallic complex compound solution in order in connect the complex compound to the reactive functional group of the polymer; reducing the metallic complex compound connected to the polymer to the corresponding catalyst metal in a reducing atmosphere; and then heating the carrier in order to remove the polymer film by decomposition.

### DISCLOSURE OF THE INVENTION

The present inventors have conducted intensive studies to accomplish the foregoing objects, and as a result, we have found that, when, in a noble metal fine particle support, the substrate surface is coated with an amino compound and allowed to have a positive charge in the method of claim 1, the noble metal fine particles are supported on the coating without unevenness.

Accordingly, the noble metal fine particle support according to the present invention is characterized in that a substrate surface is coated with an amino compound in the method of claim 1, noble metal fine particles are supported on the coating.

Thus, the surface of the substrate used for the present invention is coated with an amino compound and is allowed to have a positive charge. Therefore, the substrate becomes suitable to support noble metal fine particles with few limitations on the type of the substrate.

As the amino compound used in the present invention, compounds containing a group selected from the group consisting of a primary amino group, a secondary amino group, a tertiary amino group, a quaternary amino group, and an imino group are exemplified.

A more specific example thereof includes a compound containing a group selected from the group consisting of an amino group, a benzyltrialkylammonium group, a benzylalkyldialkanolammonium group, a quaternary alkylammonium group, an alkyldialkanolammonium group, benzylalkylamino group, a benzylalkanolamino group, a primary to tertiary alkylamino group, and an alkanolamino group.

It should be noted that the amino compounds in the present specification exclude the compounds containing an N-containing heterocycle.

Also, examples of the amino compound include an organosilicon compound and a water-soluble polymer that contain the above-described amino group or imino group.

It is preferable that the organosilicon compound be an organosilicon compound, or a hydrolysate thereof, represented by the following general formula:

### (Chemical Formula 1)

General formula: (R₁)(R₂)ₙSi(R₃)₃₋ₙ, wherein:
R₁ is a functional group selected from the group consisting of a functional group comprising an amino group and a hydrocarbon chain, a functional group comprising an imino group and a hydrocarbon chain, a functional group comprising an amino group, a hydrocarbon chain, and a hydrocarbon ring, and a functional group comprising an imino group, a hydrocarbon chain, and a hydrocarbon ring;
R₂ is an alkyl group; and
R₃ is an alkoxy group, an acetoxy group, or a chlorine atom and n is from 0 to 2.

Although the organosilicon compound contains a plurality of R₂ or R₃ groups, the plurality of the groups may be either identical or different. Specifically, for example, when there are two R₂ groups, one of them may be a methyl group and the other may be an ethyl group; alternatively, when there are two R₃ groups, one of them may be an alkoxy group and the other may be a chlorine atom.

Moreover, when the particle size of the noble metal fine particles that are supported is set at 100 nm or less, the advantage of an excellent catalytic activity can be obtained. Furthermore, when, on the surface of the noble metal fine particles, substantially only citrate ions are adsorbed and the surface is not coated with a protective colloid, the surface area that is involved in catalytic activity can be very large relative to the mass of the noble metal fine particles, improving the catalytic activity.

The present inventors have also found that a noble metal fine particle support can be manufactured industrially advantageously by the method of claim 1 wich includes coating the surface of a substrate with an amino compound to provide a positive charge for the surface, and contacting the substrate and a solution in which noble metal fine particles having a negative charge are dispersed, to cause the substrate to support the noble metal fine particles. Moreover, by irradiating the dispersion that has been contacted with the substrate with ultrasound, the noble metal fine particles can be supported on the substrate surface without unevenness.

In the noble metal fine particle support of the present invention, noble metal fine particles are supported without unevenness on the substrate surface. It is also possible to support noble metal fine particles having a uniform particle size. A further advantage is that the specific surface area per unit mass of the noble metal in the support is large, resulting in high catalytic activity.

The method of manufacturing the noble metal fine particle support of the present invention is capable of allowing the substrate surface to support noble metal fine particles without unevenness. In addition, since the method employs an adsorption process, it is also possible to cause the substrate surface to support noble metal fine particles having a uniform particle size. Furthermore, the method has almost no limitation on the type of the substrate material and is suitably employed with various types of substrate materials.

### BRIEF DESCRIPTION OF THE DRAWINGS

Fig. 1 is a schematic view illustrating a noble metal fine particle support according to the present invention.
Fig. 2 is a result of a TEM observation of noble metal fine particles used for the present invention.
Fig. 3 is a photograph illustrating the appearance of a Pt fine particle support in accordance with Example 1.
Fig. 4 is a photograph illustrating the appearance of a Pt fine particle support in accordance with Example 2.
Fig. 5 is a photograph illustrating the appearance of a Pt fine particle support in accordance with Comparative Example 1.

### BEST MODE FOR CARRYING OUT THE INVENTION

A noble metal fine particle support according to the present invention is defined in claim 3.

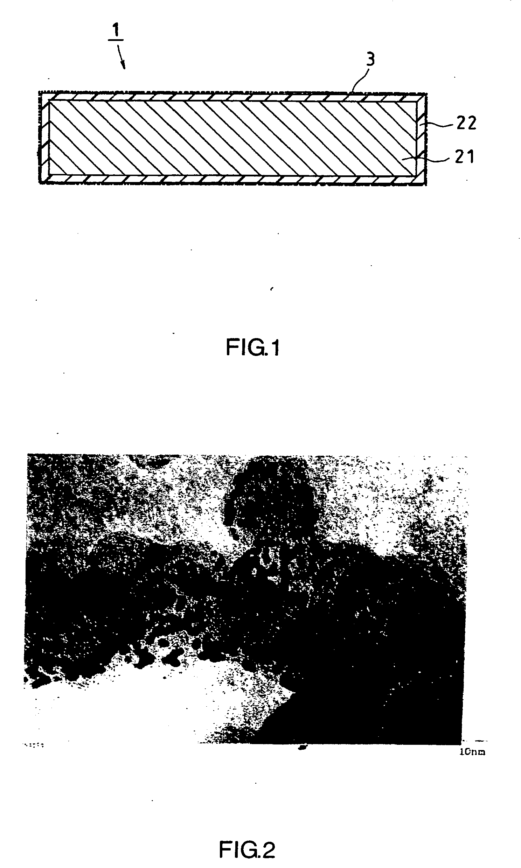

Fig. 1 shows a schematic cross-sectional view of the noble metal fine particle support of the present invention. Fig. 1 illustrates the state in which a substrate 21 is coated with an amino compound 22 and noble metal fine particles 3 are carried on the coating to form a noble metal fine particle support 1.

### (Substrate)

The substrate used in the present invention is a substrate whose surface is coated with an amino compound and has a positive charge. The positive charge is introduced by a cationic functional group contained in the amino compound, such as an amino group and an imino group. Especially, it refers to the state in which the substrate has a positive charge where it is in contact with water that is nearly neutral.

The substrate used in the present invention has a surface coated with an amino compound. Such a substrate may be manufactured according to a conventional method, for example, by coating the surface of the substrate with:
(1) an organosilicon compound having an amino group or an imino group; or
(2) a water-soluble polymer having an amino group or an imino group.

It is preferable that the hydrocarbon chain that constitutes R₁ of the organosilicon compound represented by the above general formula: (R₁)(R₂)ₙSi(R₃)₃₋ₙ have 1 to 3 carbon atoms. Examples thereof include methylene, ethylene, trimethylene, methylidene, methyl, ethyl, ethylidene, vinyl, vinylidene, vinylene, allyl, allylidene, propyl, propylene, propenyl, propenylidene, isopropyl, isopropenyl, and isopropylidene. Particularly preferable are methylene, ethylene, and trimethylene. It is preferable that the hydrocarbon ring that constitutes R₁ have 3 to 6 carbon atoms. Examples thereof include a cyclopropane ring, a cyclobutane ring, a cyclobutene ring, a cyclohexane ring, and a benzene ring. Particularly preferable are the cyclohexane ring and the benzene ring.

Each of the amino group, the imino group, the hydrocarbon chain, and the hydrocarbon ring in the R₁ may be a plurality of groups, chains, or rings, and may be two or more kinds of groups, chains, or rings. For example, it is possible that R₁ be NH₂-(CH₂)₂-NH-(CH₂)₃-, NH₂-(CH₂)₂-NH-CH₂-, CH₂=CH-CH₂-NH-(CH₂)₃- (CH₃)₂-N-(CH₂)₃-, and the like. It is preferable that the number of nitrogen atoms contained in R₁ be 3 or less.

Examples of particularly preferable R₁ include 3-aminopropyl, N-(B-aminoethyl)-y-aminopropyl, N-methylaminopropyl, N,N-dimethylaminopropyl, N-phenyl-γ-aminopropyl, 3-allylaminopropyl, 3-phenylaminopropyl, 3-cyclohexylaminopropyl, and 3-diethylaminopropyl.

It is preferable that the alkyl group represented by R₂ have 1 to 4 carbon atoms. Examples thereof include methyl, ethyl, propyl, and butyl, and particularly preferable among them is methyl. It is preferable that the alkoxy group represented by R₃ have 1 to 4 carbon atoms. Examples thereof include methoxy, ethoxy, propoxy, and butoxy, and particularly preferable among them are methoxy and ethoxy.

Preferable examples of the organosilicon compound represented by the above general formula: (R₁)(R₂)nSi(R₃)₃₋ₙ include 3-aminopropyltrialkoxysilane, N-(β-aminoethyl)-γ-aminopropyltrialkoxysilane, N-(β-aminoethyl)-γ-aminopropylmethyldialkoxysilane, γ-aminopropyltrialkoxysilane, γ-aminopropylmethyldialkoxysilane, N,N-dimethylaminopropyltrialkoxysilane, N-methylaminopropyltrialkoxysilane, N-phenyl-γ-aminopropyltrialkoxysilane, 3-aminopropyldimethylalkoxysilane, 3-allylaminopropyltrialkoxysilane, 3-phenylaminopropyltrialkoxysilane, 3-cyclohexylaminopropyltrialkoxysilane, 3-diethylaminopropyltrialkoxysilane, 3-aminopropylmethyldialkoxysilane, and 3-dimethylaminopropylmethyldialkoxysilane.

The hydrolysate of these organosilicon compounds represented by the general formula includes one in which part or all of the alkoxy group(s), the acetoxy group (s), and chlorine atom(s) in the organosilicon compound is/are substituted by a hydroxy group(s), and one in which part of the substituted hydroxy groups are naturally bonded to one another. These hydrolysates can be obtained in water or a mixed solution of water and alcohol and the like, and it is also possible to add an acid thereto to promote the hydrolysis.

Examples of the water-soluble polymer having an amino group or an imino group include polyethyleneimine, polyvinylamine, polyallylamine, polyamidine, polyacrylamide, and polyaminoalkyl(meth)acrylate.

As described above, in the present invention, the substrate surface is coated with an amino compound. This eliminates the drawback of the conventional adsorption process, with which the type of substrate is limited.

The substrate used in the present invention is not particularly limited, as long as it is capable of having a form to be noble metal fine particle support. Examples of the kinds of substrates include inorganic ceramics, inorganic fibers, carbon-based materials, metal materials, glass materials, and organic polymer materials. Examples of the inorganic ceramics include alumina, titania, silica, and zeolite.

In addition, the substrate may be a porous ceramic of silica, alumina, zeolite, and the like.

Engineering plastics are used preferably as the organic polymer material. First, plastics can be broadly classified into two groups, thermoplastic resins and thermosetting resins. The thermoplastic resin is allowed to have flowability by heating so that it can be formed into a desired shape; therefore, it is preferable as a source material for the substrate. The thermoplastic resins can be divided into two groups, general-purpose plastics and engineering plastics. The engineering plastics are further divided into two groups, general-purpose engineering plastics and super engineering plastics.

Examples of the general-purpose plastics include polyethylene (PE), polyvinyl chloride (PVC), polypropylene (PP), acrylonitrile butadiene styrene (ABS), polymethyl methacrylate (PMMA), and polyethylene terephthalate (PET).

Examples of the general-purpose engineering plastics include polyamide (PA), polyacetal (POM), polycarbonate (PC), polyphenylene ether (PPE), and polybutylene terephthalate (PBT). Among the polyphenylene ethers, modified polyphenylene ether is particularly preferable as a material for the substrate because it shows stable mechanical properties over a wide temperature range.

Examples of the super engineering plastics include polysulfone (PSU), polyethersulfone (PESU), polyphenylene sulfide (PPS), polyarylate (PAR), polyether ether ketone (PEEK), polyamideimide (PAI), and polyimide (PI).

The shape of the substrate used in the present invention is not particularly limited and various kinds of shapes may be employed, such as a particulate shape, a flake-like shape, a fibrous shape, and a polygonal shape.

It is preferable to use glass fibers, which are low cost and available in a wide variety of types, as the fibrous substrate, but ceramic fibers of alumina, silicon carbide and the like are also usable. An aggregate of these fibers is a woven or nonwoven fabric of inorganic fibers.

A woven or nonwoven fabric of glass fibers is a preferable example of the fibrous substrate. It is preferable that the glass fiber has an average diameter of 1 µm to 50 µm.

The type of glass for the glass fiber used in the present invention is not particularly limited as long as it can be formed into a fibrous form. Examples include E glass, T glass, C glass, S glass, and borosilicate glass, which are commonly used for glass fibers.

Known forms of the glass fibers include bundles of filaments (roving), chopped strands, yarns obtained by spinning filaments (which may or may not have twists), a woven fabric called a glass cloth, a nonwoven fabric, and glass wool shaped like wool, in which filaments are entangled randomly. What is easy to handle among these is a woven fabric of glass fibers, in other words, a glass cloth. The glass cloth may be woven in any way of weaving, such as plain weaving, twill weaving, and satin weaving.

### (Noble Metal Fine Particles)

Examples of the noble metal constituting the noble metal fine particles include platinum, gold, ruthenium, palladium, rhenium, osmium, rhodium, alloys thereof, and mixtures thereof. Platinum is especially preferable among them.

The particle size of the noble metal fine particles is not particularly limited as long as it does not inhibit the objects of the present invention. From the viewpoint of enhancing the activity of the noble metal fine particle support as a catalyst, it is preferable that the particle size thereof be from 1 nm to 100 nm, more preferably from 1 nm to 20 nm, and most preferably from 1 nm to 5 nm.

The noble metal fine particles that are used preferably in the present invention may be prepared by the manufacturing method described in JP 2004-100040A, filed by the present applicant. The noble metal fine particles fabricated by this manufacturing process are preferable since the particle size can be made 100 nm or less.

In addition, as in the report by Namba and Ohkura, the noble metal fine particles obtained by reducing a noble metal salt with a citrate do not have what is called protective colloid. Thus, the noble metal fine particle is not coated with the protective colloid and the surface thereof is exposed, and therefore, it exhibits excellent catalysis effect. Furthermore, the noble metal fine particles obtained by the above-mentioned method adsorb citrate ions originating from a reducing agent. Because of the citrate ions, the noble metal fine particles have a negative charge. Thus, in the present invention, the noble metal fine particles are supported without unevenness on the substrate that has a positive charge, and therefore exhibit more excellent catalysis effect.

The dispersion of noble metal fine particles is produced by boiling a reaction solution comprising a noble metal salt and a reducing agent.

Examples of the noble metal salt include chlorides, nitrates, sulfates, metal complexes of the above-mentioned noble metal. It is also possible to use two or more kinds of the just-mentioned noble metal salts.

The reducing agent includes, citric acid or citrate. It is also possible to use two or more kinds of reducing agents, including

alcohols like methanol, ethanol, 1-propanol, 2-propanol, ethylene glycol, and glycerin, citric acid and citrates (such as sodium citrate, potassium citrate, and ammonium citrate), carboxylic acids like formic acid, acetic acid, fumaric acid, malic acid, succinic acid, aspartic acid, and carboxylates thereof, ketones like acetone and methyl ethyl ketone, ethers like diethyl ether, aldehydes like formalin and acetaldehyde, esters like methyl formate, methyl acetate, and ethyl acetate, provided that citric acid or citrate is among the reducing agents.

Examples of the solvent include water, alcohols, ketones, and ethers.

Although the concentration of the noble metal salt in the reaction solution is not particularly limited as long as it does not inhibit the objects of the present invention, it is preferable that the concentration be as high as possible.

Although the equivalent concentration of the reducing agent is not particularly limited as long as it does not inhibit the objects of the present invention, it is preferable that the equivalent concentration be 2 times to 20 times the equivalent concentration of the noble metal salt.

Although the boiling (reaction) time is not particularly limited as long as it does not inhibit the objects of the present invention, it is preferable that the boiling time be from 30 minutes to 300 minutes.

### (Fabrication of Noble Metal Fine Particle Support)

The noble metal fine particle support is manufactured by coating a substrate surface with an amino compound, and contacting the substrate on which a coating has been formed and a solution in which noble metal fine particles are dispersed, to cause the substrate to support (adsorb) the noble metal fine particles. Known methods such as a dipping method, a spraying method, and an application method may be employed as the supporting method.

In manufacturing the noble metal fine particle support, it is desirable to perform ultrasound irradiation when contacting the substrate surface and the solution in which the noble metal fine particles are dispersed. With the ultrasound irradiation, it is possible to allow the noble metal fine particles to be supported without unevenness over the entire substrate surface, especially when a dipping method is employed. Although the frequency of the ultrasound is not particularly limited as long as it does not inhibit the objects of the present invention, it is preferable that the frequency be 100 kHz or less, and more preferably from 20 kHz to 45 kHz. Although the ultrasound irradiation time is not particularly limited as long as it does not inhibit the objects of the present invention, it is preferable that the irradiation time be several hours in order to obtain the uniformity.

It is preferable that in manufacturing the noble metal fine particle support, post processes such as purification, washing, and drying be carried out.

In the noble metal fine particle support that is manufactured in the foregoing manner, the noble metal fine particles are supported without unevenness on the substrate surface. Therefore, even if the amount of the noble metal fine particles that are supported is reduced, the excellent performance of the noble metal fine particles such as catalytic activity can be exhibited fully. It is also possible to support noble metal fine particles having a uniform particle size. The noble metal fine particle support is used for a variety of applications either as it is or being processed, but it is particularly preferable that it be used as a catalyst. Examples of the catalyst include an electrode catalyst for fuel cells, a reforming catalyst for reforming hydrocarbon compounds to generate hydrogen, a photocatalyst promoter for enhancing the activity of a photocatalytic material, and a cracking catalyst for environmental toxic substances contained in industrial waste water or exhaust gas.

### (Example 1)

Example 1 is an example in which a coating of an amino compound is formed on the surface of a modified polyphenylene ether (PPE) substrate and platinum (Pt) fine particles are supported thereon.
(1) Aminopropyltriethoxysilane (1 g) and ethanol (18 mL) were mixed and stirred, and thereafter dilute hydrochloric acid (0.33 mL) was added thereto. The mixed solution was stirred for 2 hours, whereby a coating-forming solution of the compound containing an amino group with a solid content of 3.0% was obtained.

The above-described coating-forming solution (5 mL) was flow coated onto a modified PPE substrate (available from GE Polymerland Japan Ltd., under the tradename "Noryl PN235-GY5311") having dimensions of 15 mm × 50 mm × 3 mm and thereafter dried at room temperature for 30 minutes, followed by a heat treatment at 120°C for 30 minutes. Thereby, a substrate having amino groups on its surface and having a positive charge was obtained.
(2) By boiling and refluxing pure water obtained by ion exchange and ultrafiltration, the dissolved oxygen contained therein was removed. Next, this pure water was added to hydrogen hexachloroplatinate hexahydrate to prepare an aqueous hydrogen hexachloroplatinate solution. Also, sodium citrate was added to the above-described pure water to prepare an aqueous sodium citrate solution. This sodium citrate serves as a reducing agent.

Subsequently, the aqueous hydrogen hexachloroplatinate solution was introduced to pure water that had been boiled and refluxed to remove the dissolved oxygen contained therein, and the mixture was boiled and refluxed for 30 minutes. Then, the aqueous sodium citrate solution was introduced thereto. Thereafter, the boiling and refluxing was continued to proceed the reduction reaction of platinum. The reaction was stopped after 1.5 hours from the start of the reduction reaction, and the reaction solution was quenched to room temperature.

The cooled reaction solution was passed through a column in which an ion exchange resin MB-1 (made by Organo Corp.) was filled, to remove the metallic ions and the reducing agent remaining in the reaction solution, whereby a stable Pt fine particle dispersion was obtained.

The platinum fine particles in the resultant dispersion were observed with a transmission electron microscope (TEM) to measure their particle sizes. As a result, it was found that the particle sizes were 1-5.5 nm. Fig. 2 shows one example of the observation result. In the figure, what are observed to be black in color are platinum fine particles.
(3) The substrate having amino groups and having a positive charge on its surface, obtained in the manner described in the foregoing (1) was immersed in 50 mL of the Pt fine particle dispersion (Pt concentration: 5000 mg/L) obtained in the manner described in the foregoing (2), and 42 kHz ultrasound (US) was irradiated thereto for 90 minutes with the substrate being immersed. The resultant Pt fine particle support was taken out, washed with pure water, and dried at 120°C for 15 minutes.

### (Example 2)

Example 2 is an example in which platinum (Pt) fine particles were supported on a PPE substrate and in which no US irradiation was performed in Example 1.
(1) The substrate obtained in the manner described in (1) of Example 1 was immersed in 50 mL of Pt fine particle dispersion obtained in the manner described in (2) of Example 1 for 90 minutes. No US irradiation was performed.
(2) The resultant Pt fine particle support was taken out, washed with pure water, and thereafter dried at 120°C for 15 minutes.

### (Comparative Example 1)

Comparative Example 1 is an example in which platinum (Pt) fine particles are supported directly on a PPE substrate.
(1) A modified PPE substrate having dimensions of 15 mm × 50 mm × 3 mm was immersed in 50 mL of Pt fine particle dispersion obtained in the manner described in (2) of Example 1 for 90 minutes. No US irradiation was performed.
(2) The resultant Pt fine particle support was taken out, washed with pure water, and thereafter dried at 120°C for 15 minutes.

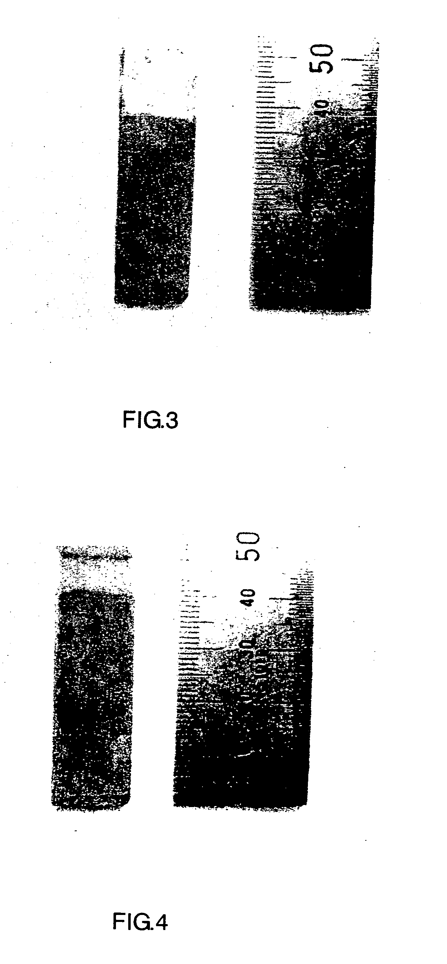

The appearances of the noble metal fine particle supports prepared in Examples 1 and 2 as well as Comparative Example 1 described above were observed. The results are shown in Figs. 3 to 5, respectively. When the fine particles of platinum are supported on a substrate surface, that portion changes into black in color due to what is called platinum black. Therefore, the state in which noble metal fine particles are adhered can be found by visual observation even with the naked eye.

As seen from Fig. 3, which shows the observation result for Example 1, it was confirmed that the portion on which the coating was formed changed into black color, and that Pt fine particles were supported on that portion without unevenness.

Also in Fig. 4, which shows the observation result for Example 2, it was confirmed that the portion on which the coating was formed changed into black color, and that Pt fine particles were supported without unevenness over a wide area.

It was seen particularly that Pt fine particles were supported more uniformly without unevenness in Example 1, in which US irradiation was performed, than in Example 2. This is believed to be because the dispersion state of the Pt fine particles in the dispersion was improved by the US irradiation.

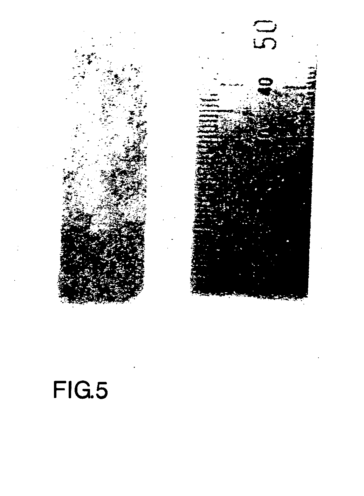

In contrast to these, as seen from Fig. 5, aggregated Pt fine particles were adhered unevenly to the substrate surface in Comparative Example 1, in which no amino compound coating was formed on the substrate surface.

From the observation results above, it should be noted that Example 1, in which US irradiation was performed, is especially worthy of note. It is understood that in Example 1, Pt fine particles are supported on the substrate surface uniformly without unevenness. This is believed to be because the dispersion state of the Pt fine particles in the dispersion improved by the US irradiation. Another advantageous effect of the US irradiation is that it makes the supported state of the Pt fine particles uniform. By performing US irradiation, the adhering substances on the surface of an article are peeled off due to the cavitation effect. As a result, only the Pt fine particles bonded to the coating of the amino compound with large supporting strength can keep the supported state, while the Pt fine particles with small supporting strength are desorbed temporarily and dispersed again in the dispersion. By repeating this process, it becomes possible to support the Pt fine particles with large supporting strength without unevenness.

### (Example 3)

Example 3 is an example in which the surface of an inorganic fiber nonwoven fabric is caused to have a positive charge so that Pt fine particles are supported thereon.
(1) The coating-forming solution obtained in the manner descried in (1) of Example 1 was dip coated onto an inorganic fiber nonwoven fabric (dimensions: 20 mm × 15 mm × 2 mm) made of glass fiber, and thereafter dried at room temperature for 30 minutes, followed by a heat treatment at 100°C for 1 hour. Thereby, a substrate, the surface of which was coated with an amino compound, was obtained.
(2) This substrate was immersed in 15 mL of a Pt fine particle dispersion obtained in the manner described in (2) of Example 1, and 42 kHz ultrasound was irradiated thereto for 90 minutes with the substrate being immersed.
(3) The resultant Pt fine particle support was taken out, washed with pure water, and thereafter dried at 100°C for 12 hours.

### (Example 4)

Example 4 is an example in which no US irradiation is performed in Example 3.
(1) The substrate obtained in the manner described in (1) of Example 3 was immersed in 15 mL of a Pt fine particle dispersion obtained in the manner described in (2) of Example 1 for 90 minutes. No US irradiation was performed.
(2) The resultant Pt fine particle support was taken out and subjected to the washing process of (3) in Example 3.

### (Comparative Example 2)

Comparative Example 2 is an example in which Pt fine particles are supported directly on the surface of an inorganic fiber nonwoven fabric.
(1) An inorganic fiber nonwoven fabric (dimensions: 20 mm × 15 mm × 2 mm) made of glass fiber was immersed in 15 mL of a Pt fine particle dispersion obtained in the manner described in (2) of Example 1 for 90 minutes. No US irradiation was performed.
(2) The resultant Pt fine particle support was taken out and subjected to the washing process of (3) in Example 3.

### [Comparison in Activity from Hydrogen Peroxide (H₂O₂) Decomposition Characteristics]

The activities of the various Pt fine particle supports obtained by using the inorganic fiber nonwoven fabric as the substrate in the above-described manner were compared from H₂O₂ decomposition characteristics.

15 mL commercially available hydrogen peroxide solution with a concentration of 30% is introduced into an Erlenmeyer flask, and thereafter kept for 5 minutes in a water bath at a temperature of 50°C while being stirred with a stirrer. Subsequently, an inorganic fiber nonwoven fabric with a predetermined size on which Pt fine particles have been supported is put into the Erlenmeyer flask, and immediately thereafter, a flowmeter is connected to the Erlenmeyer flask. Setting the time point at which the inorganic fiber nonwoven fabric was introduced as 0, the amount of oxygen generated is measured each 15 seconds for 3 minutes. From the total amount of oxygen generated for the 45 second period in which the amount of oxygen generated is greatest, the amount of oxygen generated per unit time (mL/minute) is measured, which is employed as the H₂O₂ decomposition characteristic. The results are shown in Table 1.

**(Table 1)**

| H₂O₂ Decomposition Characteristics for Respective Supports | |
|---|---|
| Sample | Decomposition characteristic (mL/min.) |
| Example 3 | 2070 |
| Example 4 | 210 |
| Comparative Example 2 | 110 |

It was found that the supports obtained in Examples 3 and 4 had higher H₂O₂ decomposition characteristics than the support obtained in Comparative Example 2. This is believed to be because, by providing a positive charge for the substrate surface, Pt fine particles could be supported without unevenness. It was also found that Example 3, in which US irradiation was performed, showed a particularly superior H₂O₂ decomposition characteristic.

### (Example 5)

Example 5 is an example in which a coating of an amino compound is formed on the surface of a slide glass and the surface is caused to support platinum (Pt) fine particles thereon.
(1) Polyethyleneimine (available from Nippon Shokubai Co., Ltd. under the tradename "Epomin SP-012") and pure water were mixed together and stirred for 30 minutes, whereby a coating-forming solution of an amino compound containing an imino group with a polyethyleneimine concentration of 0.01% was obtained.

This coating-forming solution (5 mL) was flow coated onto a slide glass (made by Matsunami Glass Ind. Ltd.) with 76 mm × 26 mm dimensions, and thereafter dried at 40°C for 10 minutes, whereby a substrate having a positive charge was obtained.
(2) This substrate having a positive charge was immersed in 50 mL of a Pt fine particle dispersion obtained in the manner described in (2) of Example 1 for 10 minutes. No US irradiation was performed. The resultant Pt fine particle support was taken out, washed with pure water, and dried at 40°C for 30 minutes.

### (Comparative Example 3)

Comparative Example 3 is an example in which Pt fine particles are supported directly on the surface of a slide glass.
(1) A slide glass (made by Matsunami Glass Ind. Ltd.) with 76 mm × 26 mm dimensions was immersed in 50 mL of a Pt fine particle dispersion obtained in the manner described in (2) of Example 1 for 10 minutes. No US irradiation was performed.
(2) The resultant Pt fine particle support was taken out, washed with pure water, and dried at 40°C for 30 minutes.

When the support obtained in Example 5 was immersed in a hydrogen peroxide solution (concentration: 30%), a large amount of oxygen bubbles were generated from the surface. On the other hand, few oxygen bubbles were observed when the support obtained in Comparative Example 3 was immersed likewise.

This is believed to be because, by providing a positive charge for the substrate surface, Pt fine particles could be supported without unevenness even with the substrate that does not easily support Pt fine particles inherently.

### (Example 6)

Example 6 is an example in which the surface of a porous ceramic is caused to have a positive charge so that Pt fine particles are supported thereon.
(1) A porous ceramic made of silica and alumina (particle size: 3 mm, made by Schott Corp.) was immersed in a coating-forming solution obtained in the manner descried in (1) of Example 1, taken out therefrom, and thereafter dried at room temperature for 30 minutes, followed by a heat treatment at 100°C for 1 hour. Thereby, a substrate the surface of which was coated with an amino compound was obtained.
(2) This substrate was immersed in 15 mL of a Pt fine particle dispersion obtained in the manner described in (2) of Example 1, and 42 kHz ultrasound was irradiated thereto for 90 minutes with the substrate being immersed.
(3) The resultant Pt fine particle support was taken out, washed with pure water, and thereafter dried at 100°C for 2 hours.

### (Comparative Example 4)

Comparative Example 4 is an example in which Pt fine particles are supported directly on the surface of a porous ceramic.
(1) A porous ceramic made of silica and alumina (particle size: 3 mm, made by Schott Corp.) was immersed in 15 mL of a Pt fine particle dispersion obtained in the manner described in (2) of Example 1 for 90 minutes. No US irradiation was performed.
(2) The resultant Pt fine particle support was taken out and subjected to the washing process of (3) in Example 6.

When the support obtained in Example 6 and the support obtained in Comparative Example 4 were immersed in a hydrogen peroxide solution (concentration: 30%), a large amount of oxygen bubbles were generated from the surface of the support obtained in Example 6. This is believed to be because, even in the pores of the porous material in which Pt fine particles are not easily supported, the Pt fine particles could be supported without unevenness by coating the material with the amino compound.

### INDUSTRIAL APPLICABILITY

The noble metal fine particle support according to the present invention is useful as a catalyst with excellent activity. It is particularly useful as, for example, an electrode catalyst for fuel cells, a reforming catalyst for reforming hydrocarbon compounds to generate hydrogen, a photocatalyst promoter for enhancing the activity of a photocatalytic material, and a cracking catalyst for environmental toxic substances contained in industrial waste water or exhaust gas.

In addition, the method of manufacturing the noble metal fine particle support of the present invention makes it possible that noble metal fine particles having a large specific surface area can be supported without unevenness. Therefore, the invention is extremely advantageous in terms of cost because the amount of noble metal used is reduced in comparison with the catalyst that is obtained by conventional methods and in which noble metal fine particles having the same degree of activity are used.

## Claims

1. A method of manufacturing a noble metal fine particle support, comprising:
coating an amino or imino compound without an N-containing hetero cycle on a surface of a substrate, and providing a positive charge for the coated surface; and
contacting the substrate and a solution in which noble metal fine particles having a negative charge are dispersed, to cause the substrate to support the noble metal fine particles as noble metal fine particles which adsorb citrate ions,
wherein said solution is obtained from boiling a solution comprising a noble metal salt and a reducing agent which includes citric acid or citrate.

2. A method of manufacturing a noble metal fine particle support according to claim 1, further comprising irradiating the dispersion that has been contacted with the substrate with ultrasound.

3. A noble metal fine particle support, wherein a substrate surface is coated with an organosilicon compound containing an amino group or an imino group, and noble metal fine particles are supported on the coating,
**characterized in that**
said noble metal fine particle support is produced according to the method of claim 1.

4. The noble metal fine particle support according to claim 3, wherein the organosilicon compound is a compound containing a group selected from the group consisting of a primary amino group, a secondary amino group, a tertiary amino group, a quaternary amino group, and an imino group.

5. The noble metal fine particle support according to claim 4, wherein the organosilicon compound is an organosilicon compound, or a hydrolysate thereof, represented by the following general formula:
(Chemical Formula 1) General Formula: (R₁)(R₂)ₙSi(R₃)₃₋ₙ,
wherein:
R₁ is a functional group selected from the group consisting of a functional group comprising an amino group and a hydrocarbon chain, a functional group comprising an imino group and a hydrocarbon chain, a functional group comprising an amino group, a hydrocarbon chain, and a hydrocarbon ring, a functional group comprising an imino group, a hydrocarbon chain, and a hydrocarbon ring;
R₂ is an alkyl group; and
R₃ is an alkoxy group, an acetoxy group, or a chlorine atom and n is from 0 to 2.

6. The noble metal fine particle support according to any one of claims 3 through 5, wherein the substrate comprises a thermoplastic resin.

7. The noble metal fine particle support according to claim 6, wherein the substrate comprises polyphenylene ether.

8. The noble metal fine particle support according to any one of claims 3 through 5, wherein the substrate comprises an inorganic fiber.

9. The noble metal fine particle support according to any one of claims 3 through 5, wherein the substrate comprises a porous ceramic.

10. The noble metal fine particle support according to claim 9, wherein the porous ceramic is at least one ceramic made of a material selected from the group consisting of silica, alumina, and zeolite.

11. The noble metal fine particle support according to any one of claims 3 through 10, wherein the particle size of the noble metal fine particles is 1 to 100 nm.

12. The noble metal fine particle support according to any one of claims 3 through 11, wherein, on each surface of the noble metal fine particles, only citrate ions are adsorbed.

13. The noble metal fine particle support according to any one of claims 3 through 12, wherein the noble metal fine particles are fine particles comprising platinum, gold, ruthenium, palladium, rhenium, osmium, rhodium, an alloy thereof, or a mixture thereof.

## Patentansprüche

1. Verfahren zum Herstellen eines Edelmetallfeinstaubträgers, umfassend:
Beschichten einer Amino- oder Iminoverbindung ohne N-haltigen Heteroring auf eine Oberfläche eines Substrates und Bereitstellen einer positiven Ladung für die beschichtete Oberfläche und
Herstellen eines Kontaktes zwischen dem Substrat und einer Lösung, in der Edelmetallfeinstaub mit einer negativen Ladung dispergiert ist, um zu bewirken, daß das Substrat den Edelmetallfeinstaub als Edelmetallfeinstaub, der Citrationen adsorbiert, trägt,
wobei die Lösung durch Kochen einer Lösung erhalten wird, die ein Edelmetallsalz und ein Reduktionsmittel umfaßt, das Zitronensäure oder Citrat umfaßt.

2. Verfahren zum Herstellen eines Edelmetallfeinstaubträgers nach Anspruch 1, ferner umfassend das Beschallen der Dispersion, die mit dem Substrat kontaktiert worden ist, mit Ultraschall.

3. Edelmetallfeinstaubträger, wobei eine Substratoberfläche mit einer Organosiliciumverbindung, die eine Aminogruppe oder eine Iminogruppe enthält, beschichtet ist und Edelmetallfeinstaub auf der Beschichtung getragen wird,
**dadurch gekennzeichnet, daß**
der Edelmetallfeinstaubträger nach dem Verfahren nach Anspruch 1 hergestellt ist.

4. Edelmetallfeinstaubträger nach Anspruch 3, wobei die Organosiliciumverbindung eine Verbindung ist, die eine Gruppe enthält, die aus der aus einer primären Aminogruppe, einer sekundären Aminogruppe, einer tertiären Aminogruppe, einer quartären Aminogruppe und einer Iminogruppe bestehenden Gruppe ausgewählt ist.

5. Edelmetallfeinstaubträger nach Anspruch 4, wobei die Organosiliciumverbindung eine Organosiliciumverbindung oder ein Hydrolysat davon ist, das durch die folgende allgemeine Formel dargestellt wird:
(Chemische Formel 1) Allgemeine Formel: (R₁) (R2)n Si (R₃)₃₋ₙ,
wobei
R₁ eine funktionelle Gruppe ist, die aus der aus einer funktionellen Gruppe, die eine Aminogruppe und eine Kohlenwasserstoffkette umfaßt, einer funktionellen Gruppe, die eine Iminogruppe und eine Kohlenwasserstoffkette umfaßt, einer funktionellen Gruppe, die eine Aminogruppe, eine Kohlenwasserstoffkette und einen Kohlenwasserstoffring umfaßt, einer funktionellen Gruppe, die Iminogruppe, eine Kohlenwasserstoffkette und einen Kohlenwasserstoffring umfaßt, bestehenden Gruppe ausgewählt ist,
R₂ eine Alkylgruppe ist und
R₃ eine Alkoxygruppe, eine Acetoxygruppe oder ein Chloratom ist und n zwischen 0 und 2 beträgt.

6. Edelmetallfeinstaubträger nach einem der Ansprüche 3 bis 5, wobei das Substrat ein thermoplastisches Harz umfaßt.

7. Edelmetallfeinstaubträger nach Anspruch 6, wobei das Substrat Polyphenylenether umfaßt.

8. Edelmetallfeinstaubträger nach einem der Ansprüche 3 bis 5, wobei das Substrat eine anorganische Faser umfaßt.

9. Edelmetallfeinstaubträger nach einem der Ansprüche 3 bis 5, wobei das Substrat ein poröses keramisches Material umfaßt.

10. Edelmetallfeinstaubträger nach Anspruch 9, wobei das poröse keramische Metall wenigstens ein keramisches Material ist, das aus einem Material hergestellt ist, das aus der aus Silica, Aluminium und Zeolith bestehenden Gruppe ausgewählt ist.

11. Edelmetallfeinstaubträger nach einem der Ansprüche 3 bis 10, wobei die Teilchengröße des Edelmetallfeinstaubs zwischen 1 und 100 nm beträgt.

12. Edelmetallfeinstaubträger nach einem der Ansprüche 3 bis 11, wobei auf jeder Oberfläche des Edelmetallfeinstaubs nur Citrationen adsorbiert sind.

13. Edelmetallfeinstaubträger nach einem der Ansprüche 3 bis 12, wobei der Edelmetallfeinstaub ein Feinstaub ist, der Platin, Gold, Ruthenium, Palladium, Rhenium, Osmium, Rhodium, eine Legierung davon oder eine Mischung davon umfaßt.

## Revendications

1. Procédé de fabrication d'un support constitué de particules fines de métal noble, consistant à :
revêtir un composé aminé ou iminé exempt d'hétérocycle contenant un atome N sur une surface d'un substrat, et fournir une charge positive pour la surface revêtue ; et
mettre en contact le substrat et une solution dans laquelle des particules fines de métal noble ayant une charge négative sont dispersées, pour que le substrat porte les particules fines de métal noble comme des particules fines de métal rare qui absorbent des ions citrates,
dans lequel ladite solution est obtenue par ébullition d'une solution comprenant un sel de métal noble et un agent de réduction qui comprend de l'acide citrique ou un citrate.

2. Procédé de fabrication d'un support constitué de particules fines de métal noble selon la revendication 1, consistant en outre à irradier avec des ultrasons la dispersion qui a été mise en contact avec le substrat.

3. Support constitué de particules fines de métal noble, dans lequel une surface d'un substrat est revêtue d'un composé d'organosilicium contenant un groupe amino ou un groupe imino, et les particules fines de métal noble sont supportées sur le revêtement,
**caractérisé en ce que**
ledit support constitué de particules fines de métal noble est produit selon le procédé de la revendication 1.

4. Support constitué de particules fines de métal noble selon la revendication 3, dans lequel le composé d'organosilicium est un composé contenant un groupe choisi dans le groupe constitué par un groupe amino primaire, un groupe amino secondaire, un groupe amino tertiaire, un groupe amino quaternaire, et un groupe amino.

5. Support constitué de particules fines de métal noble selon la revendication 4, dans lequel le composé d'organosilicium est un composé d'organosilicium, ou un hydrolysat de celui-ci, représenté par la formule générale suivante :
(Formule chimique 1) Formule générale : (R₁)(R₂)ₙSi(R₃)₃₋ₙ,
dans laquelle :
R₁ est un groupe fonctionnel choisi dans le groupe constitué par un groupe fonctionnel comprenant un groupe amino et une chaîne hydrocarbonée, un groupe fonctionnel comprenant un groupe imino et une chaîne hydrocarbonée, un groupe fonctionnel comprenant un groupe amino, une chaîne hydrocarbonée et un cycle hydrocarboné, un groupe fonctionnel comprenant un groupe imino, une chaîne hydrocarbonée et un cycle hydrocarboné ;
R₂ est un groupe alkyle ; et
R₃ est un groupe alcoxy, un groupe acétoxy, ou un atome de chlore et n vaut de 0 à 2.

6. Support constitué de particules fines de métal noble selon l'une quelconque des revendications 3 à 5, dans lequel le substrat comprend une résine thermoplastique.

7. Support constitué de particules fines de métal noble selon la revendication 6, dans lequel le substrat comprend un éther de polyphényléne.

8. Support constitué de particules fines de métal noble selon l'une quelconque des revendications 3 à 5, dans lequel le substrat comprend une fibre inorganique.

9. Support constitué de particules fines de métal noble selon l'une quelconque des revendications 3 à 5, dans lequel le substrat comprend une céramique poreuse.

10. Support constitué de particules fines de métal noble selon la revendication 9, dans lequel la céramique poreuse est au moins une céramique se composant d'un matériau choisi dans le groupe constitué par la silice, l'alumine et la zéolite.

11. Support constitué de particules fines de métal noble selon l'une quelconque des revendications 3 à 10, dans lequel la granulométrie des particules fines de métal rare est de 1 à 100 nm.

12. Support constitué de particules fines de métal noble selon l'une quelconque des revendications 3 à 11, dans lequel sur chaque surface des particules fines de métal rare, seuls les ions citrates sont adsorbés.

13. Support constitué de particules fines de métal noble selon l'une quelconque des revendications 3 à 12, dans lequel les particules fines de métal rare sont des particules fines comprenant le platine, l'or, le ruthénium, le palladium, le rhénium, l'osmium, le rhodium, un alliage de ceux-ci ou un mélange de ceux-ci.
